(19) **Europäisches Patentamt**

**European Patent Office**

**Office européen des brevets**

(11) **EP 1 070 960 B1**

(12) **EUROPÄISCHE PATENTSCHRIFT**

(45) Veröffentlichungstag und Bekanntmachung des Hinweises auf die Patenterteilung:
**26.07.2006 Patentblatt 2006/30**

(51) Int Cl.:
***G01N 27/64*** *(2006.01)*

(21) Anmeldenummer: **00113736.3**

(22) Anmeldetag: **29.06.2000**

(54) **Ionisationskammer mit einer nichtradioaktiven Ionisationsquelle**

Ionisation chamber with a non radioactive ionisation source

Chambre d'ionisation avec une source d'ionisation non radioactive

(84) Benannte Vertragsstaaten:
**AT BE CH CY DE DK ES FI FR GB GR IE IT LI LU MC NL PT SE**

(30) Priorität: **17.07.1999 DE 19933650**

(43) Veröffentlichungstag der Anmeldung:
**24.01.2001 Patentblatt 2001/04**

(73) Patentinhaber: **Bruker Daltonik GmbH**
**28359 Bremen (DE)**

(72) Erfinder: **Döring, Hans-Rüdiger**
**04328 Leipzig (DE)**

(56) Entgegenhaltungen:
DE-A- 19 627 621    DE-C- 19 627 620
US-A- 3 881 111     US-A- 5 528 150

**Beschreibung**

Die vorliegende Erfindung betrifft eine Ionisationskammer mit einer nicht-radioaktiven Ionisationsquelle, vorzugsweise eines Ionenmobilitätsspektrometers, eines Elektroneneinfangdetektors oder eines Massenspektrometers mit Ionisation bei Atmosphärendruck (APIMS), mit einer Reaktionsteilkammer, einer Zuleitung, um einen Analyten in die Reaktionsteilkammer zuzuführen, und einer Ableitung, um den Analyten abzuführen, wobei die Reaktionsteilkammer durch eine für Gas undurchlässige Trennwand von einer evakuierten Teilkammer getrennt ist, wobei eine nicht-radioaktive Elektronenquelle in der evakuierten Teilkammer angebracht ist und den negativen Pol einer Beschleunigungsstrecke bildet.

Eine solche Ionisationskammer ist bekannt aus der DE 196 27621 C2 für ein Ionenmobilitätsspektrometer (IMS) und aus der DE 196 27620 C1 für einen E-lektroneneinfangdetektor (ECD). Aus der WO 93/22033 A1 ist ein Photoionisations- IMS bekannt, das als Ionenquelle eine Blitzlampe verwendet. Ionisierbare Moleküle eines Probengases werden durch das von der Blitzlampe emittierte UV-Licht ionisiert.

Ionenmobilitätsspektrometer (IMS) wurden in den frühen 70-er Jahren eingeführt, um organische Dämpfe in Luft zu analysieren und nachzuweisen. Ein Ionenmobilitätsspektrometer besteht aus einer Reaktionskammer, um Ionen der zu analysierenden Substanzen zu erzeugen und aus einer Driftkammer, um die Ionen zu separieren. In der Reaktionskammer werden zur Erzeugung der zu analysierenden Ionen üblicherweise radioaktive Materialien verwendet wie z.B. Tritium, $^{63}$Ni, $^{241}$Am usw.. Der Nachteil eines solchen IMS ist, daß die Verwendung einer radioaktiven Ionisationsquelle für die Umwelt und die Gesundheit des Wartungspersonals gefährlich sein kann.

In diesem Zusammenhang wurde eine Vielzahl von Versuchen gemacht, IMS-Aufbauten mit nicht-radioaktiven Ionisationsquellen in der Reaktionskammer zu entwerfen wie z.B. Photoemitter zur Erzeugung von Elektronen. Bei diesen Versuchen konnte man jedoch den Kontakt von analysierten Gasmolekülen mit der Quellenoberfläche nicht ausschließen. Dies ist einer der Gründe für Instabilitäten der Detektoranzeigen, da solche Kontakte die Betriebscharakteristik einer nicht-radioaktiven Quelle verändern können.

Vorbekannte IMS bestehen aus einer Reaktionskammer, einer Driftkammer, einer nicht-radioaktiven Elektronenquelle, die in besagter Reaktionskammer eingebaut ist, einer an die Reaktionskammer angeschlossene Zuleitung, um einen Analyten zuzuführen, und aus einer Ableitung, um den Analyten abzuführen, sowie aus einer in die Driftkammer eingebauten Fangelektrode (siehe z.B. Begley P., Carbin R., Fougler B.F. Sammonds P.G., J. Chromatogr. 588 (1991) Seite 239).

Der Nachteil dieser vorbekannten IMS ist, daß der Analyt in direkten Kontakt mit der Oberfläche der nicht-radioaktiven Ionisationsquelle kommt, was seinerseits die Betriebsbedingungen besagter Ionisationsquelle verändert und einer der Gründe für Instabilitäten der Detektoranzeige sein kann.

In der US-PS 5,021,654 wird beschrieben, eine radioaktive Ionenquelle gegen eine nicht-radioaktive in der Form einer Glühemissionsquelle in einfacher Weise auszutauschen.

Mit dem eingangs genannten Ionisationsraum wird bereits ein IMS- bzw. ein ECD- Aufbau ermöglicht, der den Kontakt des Analyten mit der Ionisationsquelle vermeidet und es gestattet, mit positiven und negativen Ionen zu arbeiten.

Dadurch, daß die Elektronenquelle in einem separaten, evakuierten Raum untergebracht ist, wird jeder Kontakt des Gases mit ihrer Oberfläche vermieden und es herrschen stets gleiche, kontrollierte Betriebsbedingungen. Andererseits gestattet es die Transparenz der Trennwand für Elektronen, daß diese in die zweite Teilkammer der Reaktionskammer gelangen, die einen Teil des IMS-Gaskreislaufs bildet und wo durch die durch die Trennwand eintretenden Elektronen über Reaktionen mit den Gasmolekülen Molekülionen für positive oder negative Betriebsart des IMS gebildet werden. In einer bevorzugten Ausführungsform besteht die Trennwand, die die Reaktionskammer in zwei Teile trennt, aus Glimmer. Dies ist ein besonders geeignetes Material mit einerseits hoher Elektronentransparenz und andererseits ausreichender Gasdichtigkeit. Um ein etwaiges Verbiegen der Trennwand aufgrund von Druckunterschieden zu vermeiden, wird sie vorzugsweise von einem Metallgitter, z.B. aus Kupfer, gestützt, mit einer geringen Streuung und Absorption von Elektronen.

Obwohl der vorbekannte Reaktionsraum bereits eine Reihe von Problemen löst, bleibt das gravierende Problem bestehen, daß die Trennwand, um für Elektronen ausreichend transparent zu sein, sehr dünn sein muß. Dies bringt die Gefahr mit sich, daß trotz der angesprochenen Stützmaßnahmen das Fenster durch den Druckunterschied mechanisch bricht oder undicht wird, insbesondere in Anbetracht der zusätzlichen Belastung durch den intensiven Elektronenbeschuß, was u.a. zu lokaler thermischer Belastung führt, die über das Stützgitter und einen etwaigen sehr dünnen Metallfilm nur unzureichend abgeführt werden kann. Der überwiegende Teil der auf die Trennwand auftreffenden Elektronen wird nämlich immer noch in der Wand absorbiert und bewirkt mit fortschreitender Betriebsdauer der Elektronenquelle irreversible Veränderungen der Trennwand, wodurch ihre Dichtigkeit reduziert wird. Lediglich ein Elektronenanteil im Sub-ppm- Bereich kann die Wand durchdringen und ionisiert die Luftbestandteile in der Reaktionsteilkammer, weshalb nur kleine Meßsignale entstehen. Größere Meßsignale könnte man erreichen durch Erhöhung entweder des Elektronenstroms, der in die Trennwand eindringt, oder der Spannung, mit der die Elektronen vor der Trennwand beschleunigt werden. In beiden Fällen steigt allerdings der Energieeintrag in die Trennwand an und bewirkt, da die eingedrungenen Ladungen im Wandmaterial (z.B. Glimmer) nur schlecht abgeführt werden, eine Verkürzung der Lebensdauer der Apparatur, die abhängig von der Zusammensetzung des Wandmaterials dramatisch sein kann.

Es besteht daher nach wie vor der Bedarf nach einer Ionisationskammer mit nicht-radioaktiver Quelle der eingangs genannten Art mit einerseits ausreichender oder gar vergrößerter Ionisationsrate für die gewünschten Ion-Molekül-Reaktionen im Reaktionsraum und andererseits stabiler, vakuumdichter Trennwand von hoher Lebensdauer im Betrieb.

Die Aufgabe wird einerseits gelöst durch eine Ionisationskammer der eingangs genannten Art, bei der der positive Pol der Beschleunigungsspannung mit einer Röntgenanode in der evakuierten Teilkammer derart verbunden ist, daß in der Röntgenanode durch auftreffende Elektronen erzeugte Röntgenstrahlung in Richtung der Reaktionsteilkammer auf die Trennwand gelangt, daß die Trennwand für Elektronen der durch die Beschleunigungsspannung erzielten kinetischen Energie im wesentlichen undurchlässig und für die in der Röntgenanode erzeugte Röntgenstrahlung weitgehend durchlässig ist und daß in der Reaktionsteilkammer mindestens eine Elektrode zur Erzeugung von Photoelektronen in einer Konversionsschicht der mindestens einen Elektrode durch die durch die Trennwand durchtretende Röntgenstrahlung angeordnet ist.

Die Aufgabe wird andererseits gelöst durch eine Ionisationskammer der eingangs genannten Art, bei der der positive Pol der Beschleunigungsspannung mit einer Röntgenanode in der evakuierten Teilkammer derart verbunden ist, daß in der Röntgenanode durch auftreffende Elektronen erzeugte Röntgenstrahlung in Richtung der Reaktionsteilkammer auf die Trennwand gelangt, daß die Trennwand für Elektronen der durch die Beschleunigungsspannung erzielten kinetischen Energie im wesentlichen undurchlässig und für die in der Röntgenanode erzeugte Röntgenstrahlung weitgehend durchlässig ist und daß die Röntgenstrahlung beim Eintritt in die Reaktionsteilkammer weitgehend Quantenenergien unter 2 keV, vorzugsweise unter 1 keV, umfaßt, so daß in der Reaktionsteilkammer Luftbestandteile durch die Röntgenquanten effektiv ionisiert werden.

Die erfindungsgemäße Ionisationskammer ermöglicht einerseits die Ionisierung von Luftbestandteilen in einer Reaktionsteilkammer bei Atmosphärendruck, insbesondere eines IMS, eines ECD oder APIMS, bei dem außerhalb der Reaktionsteilkammer unter Vakuum durch Elektronenbeschuß Röntgenstrahlung erzeugt wird, die durch eine stabile, vakuumdichte und für die erzeugte Röntgenstrahlung weitgehend transparente Trennwand in die Reaktionsteilkammer gelangt, wo sie auf einer oder

mehreren Elektroden Photoelektronen und/oder niederenergetischere Röntgenquanten auslöst, die die Luftbestandteile ionisieren.

Die erfindungsgemäße Ionisationskammer ermöglicht andererseits auch die Ionisierung von Luftbestandteilen in einer Reaktionsteilkammer bei Atmosphärendruck, insbesondere eines IMS, eines ECD oder APIMS, bei dem außerhalb der Reaktionsteilkammer unter Vakuum durch Elektronenbeschuß Röntgenstrahlung erzeugt wird, die durch eine stabile, vakuumdichte und für die erzeugte Röntgenstrahlung weitgehend transparente Trennwand in die Reaktionsteilkammer gelangt, wo die Quantenenergie der Röntgenquanten unter 2 keV, vorzugsweise unter 1 keV liegt, so daß die Röntgenquanten die Luftbestandteile mit ausreichender Effizienz ionisieren.

In einer bevorzugten Ausführungsform der erfindungsgemäßen Ionisationskammer besteht die Trennwand aus Beryllium und weist eine Dicke zwischen 10 $\mu$m und 200 $\mu$m auf. Berylliumfenster sind an sich aus der Röntgentechnik bekannt und werden wegen ihrer guten Transparenz in Verbindung mit ausreichender Festigkeit verwendet. In dem bevorzugten Dickenbereich ist die Trennwand haltbar und vakuumdicht und stellt für Elektronen eine undurchdringliche Barriere dar. Das in der Anode erzeugte Röntgenlicht kann die Trennwand dagegen nahezu ungehindert passieren.

Eine bevorzugte Alternative ist eine Trennwand aus Glimmer mit einer Dicke zwischen 7 $\mu$m und 40 $\mu$m. Glimmer ist für die in Frage kommende Röntgenstrahlung zwar nicht so durchlässig wie Beryllium und die Trennwand muß daher dünner sein. Allerdings werden die Nachteile von Beryllium, nämlich der höhere Preis und die Giftigkeit, vermieden.

In Ausführungsformen der Erfindung liegt die Beschleunigungsspannung zwischen 2 keV und 20 keV liegt, vorzugsweise zwischen 5 keV und 15 keV.

Dadurch kann in der Röntgenanode Röntgenstrahlung erzeugt werden, die entweder direkt geeignet ist, in der Reaktionsteilkammer Luftbestandteile zu ionisieren oder durch Konversion in einer dortigen Konversionsschicht dazu geeignete Photoelektronen auszulösen und/oder niederenergetischere Röntgenstrahlung zu erzeugen, die dies leistet.

Vorzugsweise enthält die Röntgenanode Elemente mit Ordnungszahlen größer als 50, insbesondere Gold. Dadurch wird vermehrt Bremsstrahlung erzeugt.

Bevorzugt ist die Röntgenanode innerhalb der evakuierten Teilkammer mit Abstand von der Trennwand angeordnet derart, daß im wesentlichen keine von der Elektronenquelle ausgehenden Elektronen die Trennwand erreichen. Dies leistet beispielsweise eine Anordnung, bei der die Elektronen in Näherung parallel zur Trennwand auf die Röntgenelektrode beschleunigt werden, wo sie etwa unter 45° auftreffen und Röntgenstrahlung erzeugen (charakteristische Strahlung und Bremsstrahlung). Nur die Röntgenstrahlung trifft auf die Trennwand, die damit nicht durch Elektronen belastet wird.

Alternativ kann aber auch die Röntgenanode als Metallschicht auf die Trennwand aufgebracht sein, wodurch von der Elektronenquelle her auftreffende Elektronen in dieser Metallschicht abgebremst werden und Röntgenstrahlung erzeugen, die auf der Gegenseite in die Trennwand eintritt und diese durchdringt.

Die Metallschicht ist dabei vorzugsweise so dick, daß sie mindestens 7 Halbwertsdicken der von der Elektronenquelle eindringenden Elektronen umfaßt, so daß praktisch keine Elektronen direkt die Trennwand erreichen und die thermische Belastung durch die Leitfähigkeit der Metallschicht bereits deutlich gemildert ist.

Andererseits sollte jedoch die Metallschicht so dünn sein, daß sie höchstens 2 Halbwertsdicken der erzeugten Röntgenstrahlung umfaßt. Dadurch ist sichergestellt, daß noch hinreichend intensive Röntgenstrahlung durch die Trennwand in die Reaktionsteilkammer eindringt.

Vorzugsweise umfaßt die Elektronenquelle eine Glühkathode. Dies ist die gängigste Art, Elektronen zu erzeugen. Die Erfindung läßt sich jedoch auch mit anderen Elektronenquellen durchführen.

In einer Ausführungsform der Erfindung ist die Elektrode in der Reaktionsteilkammer als Konversionsschicht auf der Trennwand angebracht ist. Dies ist eine einfach durchführbare Variante. Die durch die Trennwand durchtretende Röntgenstrahlung erzeugt in ihrem Volumen und auf ihrer Oberfläche Photoelektronen und/oder niederenergetischere Röntgenquanten, die in die Reaktionsteilkammer eintreten und dort Luftbestandteile ionisieren.

Bevorzugt ist dabei die Konversionsschicht so dick, daß sie mindestens 1, höchstens 7 Halbwertsdicken der auf sie auftreffenden Röntgenstrahlung umfaßt. Dadurch ist ein ausreichender Wirkungsgrad für die Konversion gewährleistet.

Insbesondere liegt die Dicke der Konversionsschicht zwischen 1 $\mu$m und 200 $\mu$m, je nach Abhängigkeit des verwendeten Konversionsmaterials, das auch mehrere Bestandteile haben kann, und der Energie der eintretenden Röntgenquanten. Die Umwandlung in niederenergetischere Strahlung und letztlich Photoelektronen kann über mehrere Konversionsstufen erfolgen, wobei sich entsprechend der Einsatz angepaßter Materialien anbietet.

Alternativ kann die Elektrode oder mehrere Elektroden in der Reaktionsteilkammer auch mit Abstand von der Trennwand angeordnet sein derart, daß Röntgenstrahlung unter einem Winkel auf die Konversionsschicht(en) auftrifft.

Eine Weiterbildung dieser Ausführungsform verwendet mehrere im wesentlichen parallele Elektroden in der Reaktionsteilkammer, die mit Abstand von der Trennwand angeordnet sind derart, daß Röntgenstrahlung unter einem Winkel von etwa 90° auf die Konversionsschichten auftrifft. Dadurch wird in der Reaktionsteilkammer die eintretende Röntgenstrahlung besonders effektiv in die Luftbestandteile mit gutem Wirkungsgrad ionisierende Strahlung und/oder Elektronen umgewandelt.

Dabei sind bevorzugt die einzelnen Elektroden so dick, daß sie jeweils etwa eine zehntel bis eine Halbwertsdicke der auf sie auftreffenden Röntgenstrahlung umfassen, wodurch alle Elektroden zur Umwandlung beitragen.

Dieser Effekt kann durch Vergrößern der wirksamen Konversionsflächen noch weiter verstärkt werden, wenn die eine oder die mehreren Elektroden in der Reaktionsteilkammer mit Abstand von der Trennwand angeordnet sind und eine lamellierte Oberflächenstruktur aufweisen.

In einer Ausführungsform bestehen die Konversionsschichten aus Materialien, deren K-Schalen-Niveaus kleiner sind als die mittleren Quantenenergien der auf sie auftreffenden Röntgenstrahlungen. Dadurch kann, ggf. kaskadenartig sekundäre Röntgenstrahlung erzeugt werden, die niedrigere Quantenenergie aufweist und daher zur effektiven Ionisation besser geeignet ist.

In einer Ausführungsform bestehen die Konversionsschichten aus Materialien, deren K-Schalen-Niveaus näherungsweise mit den mittleren Quantenenergien der auf sie auftreffenden Röntgenstrahlungen übereinstimmen. Dadurch werden effektiv Photoelektronen ausgelöst, die die Luftbestandteile ionisieren.

Bei der Verwendung mehrerer Elemente in den Konversionsschichten können die beiden gerade genannten Effekte auch kombiniert werden. Es werden, ggf. über mehrere Stufen, niederenergetischere Röntgenquanten erzeugt, die entweder mit bereits gutem Wirkungsgrad Luftbestandteile ionisieren oder die letztlich dann Photoelektronen auslösen, die dies bewirken.

Zwischen der Elektronenquelle und der Röntgenanode kann eine zusätzliche Fokussierungselektrode angebracht sein, die mit der Beschleunigungsspannungsquelle verbunden ist.

In vorteilhafter Weise kann im Gegensatz zu einer β-Quelle die Intensität und/oder Energie der Elektronen, d.h. ihre Reichweite, verändert und damit für die jeweiligen, insbesondere geometrischen Verhältnisse optimiert werden. Im Fall eines ECD kann die Elektronen-Reichweite von etwa 7 mm bei einer [63i]Ni-Quelle auf weniger als 0.2 mm verkleinert werden, indem man Elektronen mit Energien von etwa 1,5 bis 2 keV, statt mit 16 keV bei der $^{63}$Ni-Quelle, erzeugt und damit z.B. für Kapillarsäulendetektoren das Detektorvolumen entscheidend verkleinern kann und dennoch die erwünschte räumlich inhomogene Ionisierung beibehält.

Bei einem IMS kann die Elektronen-Reichweite an die Länge des Reaktionsraums angepaßt werden. Dies ist besonders wichtig bei einer Miniaturisierung (Mikro- IMS).

Durch Verändern der Intensität kann die Empfindlichkeit gesteigert bzw. an die jeweilige Messung angepaßt werden. Wenn in einem vorgeschalteten Übersichtsscan oder einer vorangehenden Messung keine oder unzulänglich wenige Produkt-Ionen gefunden werden, kann die Intensität entsprechend erhöht werden. Entsprechend kann die Intensität wieder herabgesetzt werden, wenn die Anzahl an Produkt-Ionen höher als erforderlich wird.

Weitere Vorteile der Erfindung ergeben sich aus der Beschreibung und der beigefügten Zeichnungen. Ebenso können die vorstehend genannten und die noch weiter ausgeführten Merkmale erfindungsgemäß jeweils einzeln für sich oder zu mehreren in beliebigen Kombinationen Anwendung finden. Die beschriebenen Ausführungsformen sind nicht als abschließende Aufzählung zu verstehen, sondern haben vielmehr beispielhaften Charakter.

Die Effekte, die letztlich zum erfindungsgemäßen Aufbau der Ionisationskammer führten, traten experimentell sehr überraschend auf. Im folgenden sollen vorab einige halbquantitative, allgemeinere Berechnungen bzw. Abschätzungen wiedergegeben werden, die einen ersten Ansatz bilden können, den Hintergrund möglicher physikalischer Mechanismen, die bei der Erfindung ausgenutzt werden, zu verstehen.

Dringen energiereiche Elektronen in einen Festkörper ein, dann werden sie abgebremst, wobei sich ihre kinetische Energie verteilt auf die Bildung neuer Ladungsträger ($\rightarrow$"Ionisationsbremsung") und auf die Erzeugung von Strahlung ($\rightarrow$ "Strahlungsbremsung").

Beim Stoß des primären Elektrons mit einem Hüllenelektron des bremsenden Mediums wird maximal 50% seiner kinetischen Energie übertragen. Diese Energie verteilt sich auf die Ablösearbeit (= Bindungsenergie des Hüllenelektrons, z.B. ca.15 eV bei einem Valenzelektron bzw. ca. 0,5...1,5 keV bei einem K-Schalen-Elektron) und kinetische Energie des so entstandenen Sekundär-Elektrons. Ist diese Energie ausreichend groß, dann können erneut Ionisationsprozesse stattfinden.

Neben diesen Ionisationsprozessen finden auch elastische Streuungen der primären und sekundären Elektronen statt. Mit abnehmender kinetischer Energie wird der Ablenkwinkel (bezogen auf die ursprüngliche Bewegungsrichtung) immer größer. Dadurch und durch die prinzipielle Nicht-Unterscheidbarkeit von primären und sekundären Elektronen (das energiereichere wird als das primäre bezeichnet) verästeln sich die Elektronenwege zu ihrem Ende hin stark, d.h. es kann von einer definierten Reichweite der primären Elektronen nicht gesprochen werden.

Trägt man die Flußdichte monoenergetischer Elektronen gegen die Dicke des bremsenden Mediums auf, dann entsteht ein fast linearer Abfall mit zunehmender Schichtdicke, dessen extrapolierter Schnittpunkt mit der Achse der Schichtdicke "mittlere Reichweite" genannt wird. Die Reichweite wird nicht nur in x (cm), sondern auch in x $\rho$ (g/cm$^2$) ("Massen-Reichweite") angegeben, denn solange, wie für das bremsende Medium das Verhältnis von Ordnungszahl zu Atomgewicht konstant ist, ist das "Massenbremsvermögen" (-dE/dx)/$\rho$ nahezu unabhängig von der Medienart, d.h. die "linearen" Reichweiten x lassen sich unter Berücksichtigung der jeweiligen Mediendichten zwischen den Medien (z.B. Aluminium - Kupfer - Luft) umrechnen.

In einigen Ionisationskammem wurden ca. 6 $\mu$m dicke Fenster aus Muskovit-Glimmer (Muskovit = Kaliglimmer = KAl$_2$ ((OH,F)$_2$/Al Si$_3$O$_{10}$) mittlere Ordnungszahl: 9,4, mittleres Atomgewicht: 19, Dichte: 2,6...3,2 g/cm$^3$, im weiteren wird mit 2,8 gerechnet, d.h. 6 $\mu$m = 1,7 mg/cm$^2$) eingebaut, die außen (d.h. auf der Luftseite) eine 30...50 nm dicke Aluminium-Schicht besitzen.

Die Elektronen-Reichweite im Fenster-Material kann nach der folgenden Gleichung abgeschätzt werden:

$$R = 0.5\ E\ (1 - 0.983\ /\ (1 + 4.29\ E)) = \text{ca.7 HWD,}$$

wobei R die Elektronen-Reichweite in g/cm$^2$, E die Elektronen-Energie in MeV und HWD die Halbwertsdicke, d.h. die Schichtdicke, die die Energie der Elektronen um den Faktor 2 reduziert, sind.

Die Gleichung wurde überprüft an Hand der $^{63}$Ni-$\beta$-Strahlung (mittlere Energie 16 keV) und Luft als bremsendes Medium: 1 HWD = 0,9 mm Luft. Andere Literaturstellen geben für die HWD 0,5...1,3 mm Luft (Mittelwert 0,9 mm) an.

Mit dieser Gleichung wurden die Elektronenreichweiten (in mg/cm$^2$ und in $\mu$m Glimmer) und die HWD (in $\mu$m Glimmer) in Abhängigkeit von der Elektronen-energie berechnet:

Tab.1:

| $E_e$ [keV] | Reichweite R | | HWD | 6 $\mu$m Glimmer = ... HWD | $I/I_o$ nach 6 $\mu$m Glimmer |
|---|---|---|---|---|---|
| | [mg/cm$^2$] | [$\mu$m Glimmer] | | | |
| 10 | 0,3 | 1,07 | 0,15 | 40,0 | $9,1 \times 10^{-13}$ |
| 15 | 0,6 | 2,14 | 0,31 | 19,4 | $1,4 \times 10^{-6}$ |
| 20 | 0,9 | 3,21 | 0,46 | 13,0 | $1,2 \times 10^{-4}$ |
| 25 | 1,4 | 5,00 | 0,71 | 8,5 | $2,8 \times 10^{-3}$ |
| 30 | 1,9 | 6,79 | 0,97 | 6,2 | $1,4 \times 10^{-2}$ |

Spalte 5: 6 $\mu$m Glimmer entsprechen n HWD.

Spalte 6: Reduzierung des Elektronenstroms nach dem Durchgang durch 6 $\mu$m Glimmer um den Faktor 2^ Anzahl der HWD.

Unterhalb von ca.15 keV und insbes. unterhalb von 10 keV kommen mit hoher Wahrscheinlichkeit keine primären Elektronen durch das Fenster.

Werden schnelle Elektronen (1...100 keV) im Coulombfeld schwerer Kerne abgelenkt und abgebremst, dann entsteht die sog. Bremsstrahlung, deren Energieverteilung von 0 bis zur maximalen Energie der Elektronen reicht. Das Intensitätsmaximum des Bremsstrahlungsspektrums liegt beim 1,5...2-fachen der kurzwelligen Grenze, d.h. z.B. bei ca. 10 keV (=1,25 Å), wenn die Elektronen mit 15 keV ($\lambda_{min}$ = 0.83 Å) in das bremsende Medium eindringen. Ist die Elektronenenergie größer als die Energie der K-, L-, N-...Schalen des bremsenden Mediums, dann ist das kontinuierliche Bremsstrahlungsspektrum von den diskreten Linien des Bremsmediums überlagert, z.B. bei Muskovit-Glimmer: 3,3 keV vom K, 1,5 keV vom Al und 1,7 keV vom Si;die Strahlungen mit 678 eV vom F und 517 eV vom 0 (52% der Atome im Glimmer sind 0-Atome!) werden wahrscheinlich das Fenster nicht verlassen können, da sie zu niederenergetisch sind (Strahlungsabsorption ~ 1/Energie).

Für die Ausbeute an Bremsstrahlung geben verschiedene Autoren empirische Formeln bzw. Kurven an, aus denen sich für z.B. 15 keV-Elektronen ergibt:

Tab.2:

| Bremsmaterial | Luft | Al | Kupfer | Blei | Glimmer |
|---|---|---|---|---|---|
| Ordnungszahl | 7.2 | 13 | 29 | 82 | 9.4 |
| Ausbeute | $1,5 \times 10^{-4}$ | $3,3 \times 10^{-4}$ | $10^{-4}$ | $4,2 \times 10^{-4}$ | $2,2 \times 10^{-4}$ |

Die Bremsstrahlungsausbeuten sind minimal. Der überwiegende Teil der Energie der primären Elektronen wird durch "Ionisationsbremsung" in Ladungsträger (d.h. in Sekundärelektronen) umgewandelt und geht verloren, wenn diese Sekundärelektronen nicht genügend Energie besitzen, um das Fenster zu verlassen. Aus Tab.2 ist zu erkennen, daß die Bremsstrahlungsausbeute etwa um den Faktor 18 gesteigert werden könnte, wenn die primären Elektronen nicht im Glimmer (mittlere Ordnungszahl 9,4), sondern in Gold (Ordnungszahl 79) abgebremst würden.

Die im Fenster entstehende Bremsstrahlung wird auf ihrem Weg durch das Fenster abgeschwächt. Diese Intensitätsverminderung beschreibt das Lambert-Beer'sche Gesetz: $I/I_o$ = e $-(\mu/\rho) \times \rho$ mit $(\mu/\rho)$ = Massenschwächungskoeffizient und x $\rho$ = Flächendichte der schwächenden Schicht (maximal 1,7 mg/cm$^2$ für das Glimmerfenster). Die Werte für den Massenschwächungskoeffizienten sind in Form von Kurven oder Tabellen in verschiedenen Literaturstellen zusammengestellt. Es wurden die Intensitätsverminderungen der Bremsstrahlung in Abhängigkeit von der Energie der primären Elektronen (= Maximalenergie der Quanten) berechnet (Tab.3). 13 bzw. 6,5 keV entsprechen den Maxima in den Bremsstrahlungsspektren, die von 20 bzw. 10 keV-Elektronen hervorgerufen werden.

Tab. 3:

| $E_x$ [keV] | 20 | 13 | 10 | 6,5 | 3 | 1 |
|---|---|---|---|---|---|---|
| $\mu/\rho$ [cm$^2$/g] | 2,9 | 13 | 26 | 130 | 1450 | $4,23 \times 10^4$ |
| $(\mu/\rho) \times \rho$ | 0,0046 | 0,022 | 0,044 | 0,221 | 2,465 | 71,825 |
| $I/I_o$ | 0,995 | 0,978 | 0,957 | 0,802 | 0,085 | $6,4 \times 10^{-32}$ |
| $(I/I_o)$ [%] | 0,5 | 2,2 | 4,3 | 19,8 | 91,5 | 100 |

Aus diesen Berechnungen ist zu erkennen, daß - wie bereits vermutet - Strahlung mit weniger als 1 keV das Fenster nicht mehr verlassen wird und daß die charakteristische Strahlung von K, Al und Si nur sehr stark geschwächt austritt. Folglich wird das Spektrum auf den Bremsstrahlungs-"Berg", d.h. auf den Energiebereich von ca. 3 keV...$E_{max}$, beschränkt sein.

Die Schwächung der Bremsstrahlung in der äußeren, 30...50 nm dicken Aluminium-Schicht ist, wie die Werte in Tab. 4 zeigen, minimal. Angenommen wird eine mittlere Dicke von 40 nm = 4 .10$^{-6}$ cm, die, multipliziert mit der Dichte des Aluminiums (= 2,7g/cm'), einer Massenschichtdicke von 1,1 . 10$^{-5}$ g/cm$^2$ entspricht.

Tab. 4:

| $E_x$ [keV] | 3 | 6,5 | 10 | 13 | 20 |
|---|---|---|---|---|---|
| $\mu/\rho$ [cm$^2$/g] | 1450 | 130 | 26 | 13 | 2,9 |
| $(\mu/\rho) \times \rho$ | 0,016 | 0,0014 | $2,9 \times 10^{-4}$ | $\rightarrow 0$ | $\rightarrow 0$ |
| $I/I_o$ | 0,984 | 0,999 | 0,9997 | $\rightarrow 1$ | $\rightarrow 1$ |
| $(I/I_o)$ [%] | 1,6 | 0,1 | 0,03 | $\rightarrow 0$ | $\rightarrow 0$ |

Der Intensitätsverlust der Bremsstrahlung im Fenster geht zurück auf Wechselwirkungen der Quanten mit den Hüllenelektronen der Atome der Fenstermaterialien. Bei niedrigen Ordnungszahlen und niedrigen Quantenenergien ist das der Fotoeffekt.

Der Fotoeffekt ist ein reiner Absorptionsprozeß. Die gesamte Quantenenergie $E_x$ wird auf ein Elektron übertragen, das sich dann mit der kinetischen Energie $E_{kin} = E_x - E_i$ aus dem Atom entfernt, wobei $E_i$ die Bindungsenergie des Elektrons in seiner Schale (K, L, M, ...) bedeutet. Ist die Quantenenergie größer als E (K) (= Bindungsenergie in der K- Schale), so erfolgt die Fotoabsorption hauptsächlich (zu etwa 80%) in der K- Schale und nur zu etwa 20% in höheren Schalen. Die Wahrscheinlichkeit für den Fotoeffekt ist dann maximal, wenn die Quantenenergie gerade etwas größer als die Bindungsenergie des Elektrons ist. Der Emissionswinkel des Fotoelektrons (bezogen auf die Einfallsrichtung des Quants) ist abhängig von der Quantenenergie: 11° bei 1,13 MeV, 43° bei 79 keV, 65° bei 17 keV und → 90° bei noch kleineren Energien.

Ist die dem Fotoelektron mitgegebene kinetische Energie größer als die Bindungsenergie von Elektronen in benachbarten Atomen, dann kommt es dort zur Freisetzung von Sekundärelektronen usw.

Die Lücke, die das Fotoelektron hinterläßt (z.B. in der K-Schale), wird durch ein entferntes Elektron aufgefüllt, das bei seinem Sprung die Bahnenergiedifferenz durch Strahlung abgibt. Diese charakteristische Röntgenstrahlung kann in einem benachbarten Atom erneut ein Fotoelektron (natürlich mit niedrigerer Energie) freisetzen. Es ist aber auch der sog. innere Fotoeffekt möglich, bei dem - strahlungslos - ein weiteres, (ferneres) Hüllenelektron des gleichen Atoms emittiert wird (Auger- Effekt): ein L-Elektron füllt die Lücke in der K-Schale auf und gibt die Energiedifferenz z.B. an das andere L-Elektron weiter, das das Atom dadurch verlassen kann, wobei es etwa die Energie E(K) - 2E(L) bekommt (für z.B. Aluminium: ca. 1500 eV - 2. 165 eV = 1,2 keV). Solche strahlungslosen Übergänge sind bei leichten Elementen sehr wahrscheinlich.

Der Prozeß des "Löcherfüllens" kann sich kaskadenartig fortsetzen, so daß eine Vielzahl von Elektronen freigesetzt werden, die ein breites Spektrum niedrigerer Energien besitzen.

Die beschriebenen Wechselwirkungsprozesse können sich sowohl im Fenstermaterial, als auch in der Luft in der IMS- Ionenquelle abspielen.

Es werden denkbare Wege skizziert, die zu den Sättigungsströmen in der IMS-Ionenquelle führen können.

Die in der Elektronenquelle produzierten und beschleunigten Elektronen dringen in das Fenster ein und rufen eine Bremsstrahlung der Leistung $1,2 \cdot 10^{14}$ eV/s hervor (wie in den vorhergehenden Kapiteln dargelegt). Nach der empirischen Gleichung $P = 1,5 \cdot 10^{-9} \cdot Z \cdot i \cdot U^2$, wobei P die Bremsstrahlungsleistung bei vollständiger Absorption des Elektronenstrahls, Z die Ordnungszahl des bremsenden Mediums, i der Elektronenstrom und U die Spannung zur Elektronen-Beschleunigung sind, läßt sich diese Leistung zu $8,8 \cdot 10^{13}$ eV/s abschätzen (die Bedingung "vollständige Absorption des Elektronenstrahls" kann - wie gezeigt wurde - als erfüllt angesehen werden), die Abweichung liegt bei etwa - 25%. Die Strahlung breitet sich in $4\pi$-Geometrie aus; für uns ist nur die zur IMS- Ionenquelle gerichtete Halbkugel von Interesse (→ Faktor 0,5). Das Bremsstrahlungsspektrum hat wahrscheinlich ein Intensitätsmaximum bei ca. 6,5 keV - mit diesem Wert wird weitergerechnet (→ Faktor 0,65). Die Strahlung wird zu etwa 20% im Fenster abgeschwächt (→ Faktor 0,8). In der dünnen Aluminium-Schicht auf der äußeren Fensterfläche werden 0,1% der Strahlung absorbiert und in Fotoelektronen umgewandelt. Die Aluminium-Elektronen sind (im Mittel) mit 170 eV gebunden. Es entstehen also etwa $1,8 \cdot 10^8$ Fotoelektronen pro Sekunde, von denen nur wieder die 50% wichtig sind, die die Aluminium-Schicht in Richtung zur IMS- Ionenquelle verlassen (→ Faktor 0,5). Die mittlere Energie dieser Fotoelektronen ist nur schwer abschätzbar. Wenn sie etwa 1 keV (oder etwas mehr) betragen würde (z.B. L- Schalen- AugerElektronen, s.o.), dann haben diese Elektronen eine Chance, aus der Aluminium-Schicht auszutreten: eine mittlere Aluminium-Schichtdicke von 40 nm entspricht 6,8 HWD für 1 keV- Elektronen, d.h. diese Elektronen kommen mit 1 % Wahrscheinlichkeit aus dem Fenster. Ein 1 keV- Elektron produziert in Luft etwa 3 Ionenpaare pro cm und Torr; bei 760 Torr und einer maximalen Reichweite von 120 $\mu$m (= 10 HWD) entstehen 27,4 Ionenpaare pro Fotoelektron bzw. $2,5 \cdot 10^9$ Ionenpaare/s. Multipliziert man diesen Wert mit der Elementarladung, dann gibt sich ein Sättigungsstrom von etwa 410 pA. Andererseits kann auch aus dem Energieeintrag von $9 \cdot 10^7$ Elektronen/s $\cdot$ 1 keV/Elektron in die Luft der IMS- Ionenquelle durch Division mit dem luftspezifischen Ionisierungsaufwand von ca. 34 eV pro Ionenpaar und anschließender Multiplikation mit der Elementarladung der Sättigungsstrom berechnet werden: 420 pA.

Die gemessenen Sättigungsströme liegen (abhängig vom Elektronenquelle-Exemplar) bei 170...330 pA.

Alternativ zu dem hier beschriebenen Weg ist es auch denkbar, daß die LuftIonisierung nicht über den Zwischenschritt "Fotoelektronen aus der Aluminium-Schicht", sondern direkt durch die Wechselwirkung der Bremsstrahlungsquanten mit den N-, O-Atomen der Luft erfolgt. Die Wechselwirkungsart ist in der ersten Stufe der Foto- Effekt an den Atomen mit der Bildung von Foto- Elektronen, in der 2.Stufe die Ionisierung der $N_2$-,$O_2$- Moleküle durch diese Foto-Elektronen. Da die Quanten nicht geladen sind, haben sie nur geringe Wechselwirkungswahrscheinlichkeiten, d.h. die Bremsstrahlungsquanten haben in Luft (verglichen mit Elektronen gleicher Energie) etwa 1500x größere Reichweiten.

In Tab. 5 werden die Strahlungsreichweiten R (1%) bis zur Abschwächung der Strahlung auf < 1% (Zeile 3) und die Abschwächungen im Reaktionsraum (ca.3 cm lang) bzw. in der gesamten IMS- Meßzelle (ca. 8 cm lang) zusammengestellt (Zeilen 4 und 5).

Tab.5:

| $E_x$ [keV] | 1 | 1,5 | 2 | 3 | 5 | 6,5 | 10 | 13 | 15 | 20 |
|---|---|---|---|---|---|---|---|---|---|---|
| $\mu/\rho$ [cm²/g] in Luft | 3000 | 1000 | 530 | 150 | 38 | 20 | 6,2 | 2,5 | 1,5 | 0,9 |
| R(1%) [cm] | 1,2 | 3,5 | 6,7 | 24 | 93 | 178 | 572 | 1418 | 2364 | 3940 |
| Abschwächung um ...% im Reaktionsraum | 100 | 98 | 87,3 | 44,3 | 13,8 | 7,5 | 2,4 | 1 | 0,6 | 0,4 |
| in der Meßzelle | 100 | 100 | 99,5 | 77,7 | 31,6 | 18,1 | 6,2 | 2,5 | 1,5 | 0,9 |

Wenn die Quanten Energien größer 3 keV haben, wie oben abgeschätzt, dann müßten sie mit nur wenigen Wechselwirkungen durch die gesamte IMS- Meßzelle fliegen und auf der Fängerelektrode auftreffen. Das hätte einen konstanten Ionisationsstrom (hervorgerufen durch Ionisationen im Driftraum und durch Fotoelektronenauslösung in der Fängerelektrode) zur Folge, was ein Ansteigen der Basislinie im Spektrum bewirkt. Da das aber nicht beobachtet wurde, muß man schlußfolgern: entweder reichen die Quanten nicht bis in den Driftraum oder ihre Wechselwirkungswahrscheinlichkeit in der IMS- Meßzelle ist so gering, daß sie kaum detektierbare Effekte hervorrufen. Um den Anteil der Strahlung, die in die IMS- Meßzelle (konkret: in den Reaktionsraum) fällt, abzuschätzen, wird als Korrekturfaktor das Verhältnis von Reaktionsraum- Volumen (ca. 2,5cm³) zum Volumen einer Kugel mit dem Radius R (1%) eingeführt.

Tab. 6 zeigt die Resultate (Ionenpaare/s bzw. Sättigungsstrom) unter Berücksichtigung der geometrischen Verhältnisse.

Tab.6:

| $E_x$ [keV] | 1 | 1,5 | 2 | 3 | 6,3 |
|---|---|---|---|---|---|
| R (1%) [cm Luft] | 1,2 | 3,5 | 6,7 | 24 | 178 |
| Korrekturfaktor für den Absorptionsanteil | 0,13 | 0,014 | 0,002 | $4,3 \cdot 10^{-5}$ | $1,04 \cdot 10^{-7}$ |
| im Reaktionsraum Ionenpaare/s im Reaktionsraum | $1,2 \cdot 10^{-11}$ | $1,3 \cdot 10^{-10}$ | $1,8 \cdot 10^{-9}$ | $3,8 \cdot 10^{-7}$ | $9,4 \cdot 10^{-4}$ |
| Sättigungsstrom | 19 nA | 2,1 nA | 290 pA | 6,2 pA | 15 fA |

Aus den Werten in der letzten Zeile der Tab. 6 ist ablesbar, daß zwei Effekte wirksam werden können. Umfaßt das Bremsstrahlungsspektrum den Energiebereich von ca.3 keV bis zur Energie der primären Elektronen, dann ist die Luftionisierung durch Bremsstrahlung wenig wahrscheinlich; sollte jedoch der niederenergetische Anteil im Spektrum nicht zu vernachlässigen sein, dann kann der durch die Bremsstrahlung hervorgerufene Ionisationsstrom schnell dominant werden.

Die Erfindung ist in den Zeichnungen dargestellt und wird anhand konkreter Ausführungsbeispiele näher beschrieben und erläutert. Es zeigen:

Fig. 1    Schema eines an sich bekannten IMS- Spektrometers;

Fig. 2    Bremsstrahlungsquelle, die die evakuierte Teilkammer einer erfindungsgemäßen Ionisationskammer bildet;

Fig. 3a:   axiale Anordnung von Bremsstrahlungsquelle 10 und IMS- Meßzelle 1; die Konversionsschicht 18 befindet sich parallel zum und vor dem Fenster 15;

Fig. 3b:   die Strahlungsquelle 10 emittiert ihre Quanten i.w. senkrecht zur Achse der IMS- Meßzelle 1; die Konversionsschicht 18 ist in einem Winkel von 45° zur Achse befestigt;

Fig. 3c:   Anordnung von Strahlungsquelle 10 und IMS- Meßzelle 1 wie in Fig. 3b; die Konversionsschicht 18 besteht aus einer Vielzahl von parallelen Lamellen 19 , die in Achse zur IMS- Meßzelle 1 ausgerichtet sind.

Im folgenden sollen nun Ausführungsbeispiele anhand der Zeichnungen diskutiert werden.

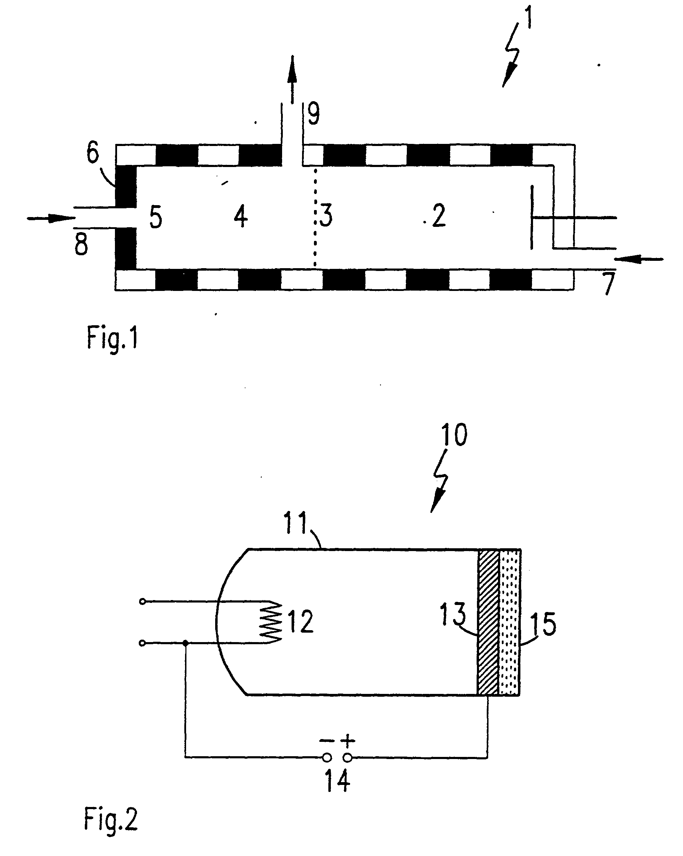

In Fig. 1 ist eine an sich konventionelle IMS- Meßzelle 1 mit einer Ionisationskammer schematisch dargestellt.

Die Meßzelle 1 besteht aus einem Driftraum 2, dem Ioneneinlaßgitter 3, der Reaktionsteilkammer 4 und einem vorderen Bereich 5 mit einer Abstoßelektrode 6.

Der Driftraum 2 hat beispielsweise einen Durchmesser von 1 oder 2 cm und eine Länge von 5 bis 10 cm. Diskrete oder kontinuierliche Strukturen wie z.B. Feldstützringe oder homogene Widerstandsbeschichtungen dienen zur Aufrechterhaltung eines elektrischen Feldes der Stärke 200 bis 300 V/cm längs der Achse des zylindrischen Driftraumes 2.

In den Driftraum tritt beim Gaseingang 7 saubere, trockene Luft mit einem Durchfluß von 5 bis 20 l/h ein. Zwischen Driftraum 2 und Reaktionsteilkammer 4 befindet sich das Ioneneinlaßgitter 3, das z.B. vom Nielsen- Bradbury- Typ ist. Der Durchmesser der Reaktionsteilkammer 4 kann genauso groß wie oder kleiner als der des Driftraumes 2 sein, seine Länge beträgt beispielsweise 1 bis 3 cm. Feldstützstrukturen analog denen des Driftraumes erhalten das elektrische Feld einer Stärke 200 ... 300 V/cm längs der Kammerachse aufrecht. Die Reaktionsteilkammer 4 wird von sauberer, trockener Luft mit einem Fluß von 5 bis 20 l/h durchströmt in Richtung vom Einlaß 8 zum Auslaß 9, der auch gleichzeitig der Auslaß für das Driftgas ist.

Am vorderen Ende 5 der Reaktionsteilkammer 4 befindet sich üblicherweise die Ionenquelle, die normalerweise eine Ni-63-β-Quelle oder eine Koronanadel oder eine Vakuum- UV- Lampe (z.B. 10,6 eV bzw. 117 nm) ist.

Zwischen dem vorderen Bereich 5 und dem Gaseingang 8 ist die Abstoßelektrode 6 angeordnet, die auf dem höchsten Punkt des Potentialgefälles längs der Achse der IMS- Meßzelle 1 liegt und dadurch die im Bereich 5 gebildeten Ladungsträger in die Reaktionsteilkammer 4 abstößt.

In Fig. 2 ist eine Bremsstrahlungsquelle 10 dargestellt.

Die Bremsstrahlungsquelle 10 besteht aus einem evakuierten Behälter 11 (Druck < $10^{-6}$ Torr), z.B. aus Glas, in dem sich eine direkt oder indirekt beheizte Glühkathode 12 und eine Anode 13 aus einem möglichst schweren Metall, z.B. Gold, befinden. Beide Elektroden sind mit der Spannungsquelle 14 verbunden, die die Potentialdifferenz zur Beschleunigung der Elektronen liefert (z.B. 10...15 kV). Die Dicke der Anode 13 ist so bemessen, daß die beschleunigten Elektronen in ihr weitestgehend absorbiert werden - sie beträgt für Gold einige 100 nm.

Hinter der Anode 13 befindet sich ein Fenster 15, das hermetisch dicht mit der Wand des Behälters 11 z.B. verklebt ist. Die Anode 13 kann mit dem Fenster 15 verbunden sein oder sie ist vom Fenster 15 mechanisch getrennt angeordnet. Das Fenster 15 ist für Luft undurchlässig, für Bremsstrahlung jedoch weitgehend durchlässig, und so dick, daß es der Druckdifferenz standhält.

Als Fenstermaterial eignet sich z.B. Beryllium (25 ... 100 $\mu$m dick) oder Glimmer (5 ... 10 $\mu$m dick).

Die von der Glühkathode 12 emittierten Elektronen 16 werden in Richtung zur Anode 13 auf 10 ... 15 keV beschleunigt und dringen in das Anodenmaterial ein, wobei Bremsstrahlung 17 entsteht, die aus der Anode 13 austritt. Die Anode 13 ist so dick, daß der überwiegende Teil der auftreffenden Elektronen 16 sie nicht durchdringen, die Bremsstrahlung 17 aber die Anode 13 nur wenig geschwächt verlassen kann. Eine geeignete Dicke ist ca. 0,4 $\mu$m; sie entspricht 10 Halbwertsdicken für 15 keV- Elektronen in Gold (reduziert also den Elektronenstrom auf etwa 1/1000) und schwächt die entstehende Strahlung um weniger als ca. 10%.

Um die Absorptionsverluste der Strahlung im Fenster 15 gering zu halten, wird ein Material mit einer niedrigen Ordnungszahl ausgewählt, z.B. Beryllium mit der Ordnungszahl 4 bzw. Muskovit- Glimmer mit einer mittleren Ordnungszahl 9, 4.

Ist die Energie der Bremsstrahlungsquanten kleiner als 2 keV, kann die Luft im Bereich 5 in Fig. 1 effektiv ionisiert werden; ist sie größer als 2 ... 3 keV, dann ist ihre Konvertierung zu Fotoelektronen nötig. Dazu wird ein geeignetes Metall wie z.B. Aluminium der Strahlung ausgesetzt.

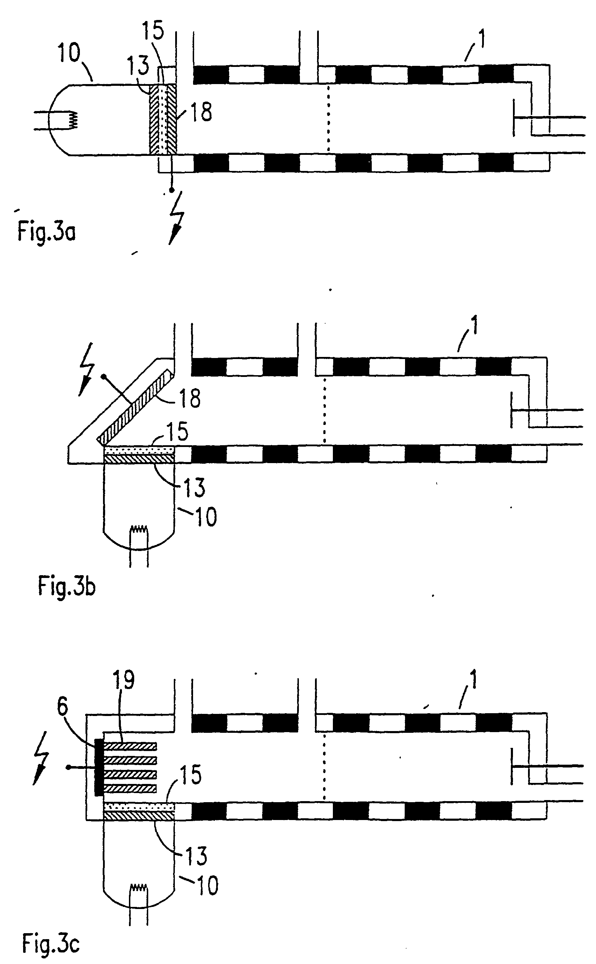

Die Fig. 3a, b, c zeigen verschiedene Anordnungen bzw. Ausführungsformen dieser Konversionsschicht 18 zwischen der Bremsstrahlungsquelle 10 und der IMS- Meßzelle 1.

In der Fig.3a ist die axiale Anordnung von Bremsstrahlungsquelle 10 und IMS-Meßzelle 1 dargestellt. Die Konversionsschicht 18 befindet sich auf bzw. vor dem Fenster 15, sie ist mit dem Fenster 15 fest verbunden, z.B. aufgedampft, oder aufgelegt. Die Dicke der Schicht 18 liegt zwischen 1 und 7 Halbwertsdicken des Aluminiums für die Fotoelektronen, z.B. 50...350 nm für 5 keV-Elektronen. In der Schicht 18 werden weniger als 1% der Bremsstrahlungsleistung in Fotoelektronen umgesetzt. Wird die Schicht 18 dicker gewählt, dann wird zwar mehr Strahlung in Fotoelektronen umgewandelt, die entstandenen Elektronen sind jedoch zu niederenergetisch, um die Schicht 18 zu verlassen. Die Schicht 18 liegt auf dem Hochspannungspotential der IMS- Meßzelle 1 und wirkt so gleichzeitig als Abstoßelektrode 6 für die von den Fotoelektronen erzeugten Reaktantionen.

Fig. 3b zeigt eine Ausführungsform, bei der die Strahlung seitlich in die IMS-Meßzelle 1 eintritt und auf die um 45° zur Achse der IMS- Meßzelle 1 geneigte Konversionsschicht 18 trifft. Der Abstand des Fensters 15 der Strahlungsquelle von der Schicht 18 entspricht dem Durchmesser des Reaktionsraumes 4 der IMS- Meßzelle 1. Die Dicke der Schicht 18 kann 1 mm oder mehr betragen, die Konvertierung der Bremsstrahlung in Fotoelektronen findet i.w. in den ersten 350...400 nm der Schicht 18 statt. Die Schicht 18 liegt wiederum auf dem Hochspannungspotential der IMS-Meßzelle 1 und stößt dadurch die gebildeten Reaktantionen in die Reaktionsteilkammer 4 der IMS- Meßzelle 1.

Eine 3. Ausführungsform ist in Fig.3c wiedergegeben. Die Bildung der Fotoelektronen findet in bzw. auf einer Vielzahl von Aluminiumlamellen 19 statt, die elektrisch leitend an der Abstoßelektrode 6 der IMS- Meßzelle 1 parallel zur Achse der Meßzelle 1 befestigt sind und von der Bremsstrahlung, die seitlich in die Meßzelle 1 eintritt, durchstrahlt werden. Die Länge der Lamellen 19 kann einige Mikrometer bis einige Millimeter betragen, desgleichen ihr Abstand voneinander. Die Lamellen 19 müssen nicht scheibenförmig, sondern können auch stäbchen- oder kegelförmig sein. Sie bedecken die Abstoßelektrode 6 auf ihrer gesamten Fläche und sind auf ihr geordnet oder regellos verteilt. Dadurch bekommt die Konversionsschicht 18 eine große Oberfläche, aus der mehr Fotoelektronen austreten als in den anderen Ausführungsformen. Im Extremfall könnte die Konversionsschicht schwammartig verteilt sein.

Die beanspruchte Erfindung ist

**Patentansprüche**

**1.** Ionisationskammer mit einer nicht-radioaktiven Ionisationsquelle (10), insbesondere für ein Ionenmobilitätsspektrometer, einen Elektroneneinfansdetektor oder ein Massenspektrometer mit Ionisation bei Atmosphärendruck, mit einer Reaktionsteilkammer (4), einer Zuleitung (8), um einen Analyten der Reaktionsteilkammer (4) zuzuführen, und einer Ableitung (9), um den Analyten abzuführen, wobei die Reaktionsteilkammer (4) durch eine für Gas undurchlässige Trennwand (15) von einer evakuierten Teilkammer (11) getrennt ist, wobei eine nicht-radioaktive Elektronenquelle (12) in der evakuierten Teilkammer (11) angebracht ist und an den negativen Pol einer Beschleunigungsspannung (14) angeschlossen ist,
**dadurch gekennzeichnet, daß**
der positive Pol der Beschleunigungsspannung (14) mit einer Röntgenanode (13) in der evakuierten Teilkammer (11) derart verbunden ist, daß in der Röntgenanode (13) durch auftreffende Elektronen erzeugte Röntgenstrahlung in Richtung der Reaktionsteilkammer (4) auf die Trennwand (15) gelangt, daß die Trennwand (15) für Elektronen der durch die Beschleunigungsspannung erzielten kinetischen Energie im wesentlichen undurchlässig und für die in der Röntgenanode (13) zeugte Röntgenstrahlung weitgehend durchlässig ist und daß in der Reaktionsteilkammer (4) mindestens eine Elektrode (18;19) zur Erzeugung von Photoelektronen in einer Konversionsschicht der mindestens einen Elektrode (18; 19) durch die durch die Trennwand durchtretende Röntgenstrahlung angeordnet ist.

**2.** Ionisationskammer mit einer nicht-radioaktiven Ionisationsquelle (10), insbesondere für ein Ionenmobilitätsspektrometer, einen Elektroneneinfangsdetektor oder ein Massenspektrometer mit Ionisation bei Atmosphärendruck, mit einer Reaktionsteilkammer (4), einer Zuleitung (8), um einen Analyten der Rektionsteilkammer (4) zuzuführen und einer Ableitung (9), um den Analyten abzuführen, wobei die Reaktionsteilkammer (4) durch eine für Gas undurchlässige Trennwand (15) von der evakuierten Teilkammer (11) getrennt ist, wobei eine nicht-radioaktive Elektronenquelle (12) in der evakuierten Teilkammer (11) angebracht ist und an den negativen Pol einer Beschleunigungsspannung (14) angeschlossen ist,
**dadurch gekennzeichnet, daß**
der positive Pol der Beschleunigungsspannung (14) mit einer Röntgenanode in der evakuierten Teilkammer (11) derart verbunden ist, daß in der Röntgenanode (13) durch auftreffende Elektronen erzeugte Röntgenstrahlung in Richtung der Reaktionsteilkammer (4) auf die Trennwand (15) gelangt, daß die Trennwand (15) für Elektronen der durch die Beschleunigungsspannung erzielten kinetischen Energie im wesentlichen undurchlässig und für die in der Röntgenanode (13) erzeugte Röntgenstrahlung weitgehend durchlässig ist und daß die Röntgenstrahlung beim Eintritt in die Reaktionsteilkammer (4) weitgehend Quantenenergien unter 2 keV umfaßt, so daß alle in der Reaktionsteilkammer (4) enthaltenen Luftbestandteile durch die Röntgenquanten effektiv ionisiert werden.

**3.** Ionisationskammer nach einem der vorangehenden Ansprüche, **dadurch gekennzeichnet, daß** die Trennwand (15) aus Beryllium besteht und eine Dicke zwischen 10 $\mu$m und 200 $\mu$m aufweist.

**4.** Ionisationskammer nach einem der Ansprüche 1 oder 2, **dadurch gekennzeichnet, daß** die Trennwand (15) aus Glimmer besteht und eine Dicke zwischen 7 $\mu$m und 40 $\mu$m aufweist.

**5.** Ionisationskammer nach einem der vorangehenden Ansprüche, **dadurch gekennzeichnet, daß** die Beschleunigungsspannung (14) zwischen 2 keV und 20 keV liegt, vorzugsweise zwischen 5 keV und 15 keV.

**6.** Ionisationskammer nach einem der vorangehenden Ansprüche, **dadurch gekennzeichnet, daß** die Röntgenanode (13) Elemente der Ordnungszahlen größer als 50 umfaßt, insbesondere Gold.

**7.** Ionisationskammer nach einem der vorangehenden Ansprüche, **dadurch gekennzeichnet, daß** die Röntgenanode (13) innerhalb der evakuierten Teilkammer (11) mit Abstand von der Trennwand (15) angeordnet ist, derart, daß im wesentlichen keine von der Elektronenquelle (12) ausgehenden Elektronen die Trennwand (15) erreichen.

**8.** Ionisationskammer nach einem der Ansprüche 1 bis 6, **dadurch gekennzeichnet, daß** die Röntgenanode (13) als Metallschicht auf der Trennwand (15) aufgebracht ist, wodurch von der Elektronenquelle (12) her auftreffende Elektronen in dieser Metallschicht abgebremst werden und Röntgenstrahlung erzeugen, die auf der Gegenseite in die Trennwand (15) eintritt.

**9.** Ionisationskammer nach Anspruch 8, **dadurch gekennzeichnet, daß** die Metallschicht so dick ist, daß sie mindestens 7 Halbwertsdicken der von der Elektronenquelle (12) eindringenden Elektronen umfaßt.

**10.** Ionisationskammer nach Anspruch 8 oder 9, **dadurch gekennzeichnet, daß** die Metallschicht so dünn ist, daß sie höchstens 2 Halbwertsdicken der erzeugten Röntgenstrahlung umfaßt.

**11.** Ionisationskammer nach einem der vorangehenden Ansprüche, **dadurch gekennzeichnet, daß** die Elektronenquelle (12) eine Glühkathode umfaßt.

**12.** Ionisationskammer nach einem der Ansprüche 1 und 3 bis 11, **dadurch gekennzeichnet, daß** die Elektrode (18) im der Reaktionsteilkammer (4) als Konversionsschicht auf der Trennwand (15) angebracht ist.

**13.** Ionisationskammer nach Anspruch 12, **dadurch gekennzeichnet, daß** die Konversionsschicht so dick ist, daß sie mindestens 1, höchstens 7 Halbwertsdicken der auf sie auftreffenden Röntgenstrahlung umfaßt.

**14.** Ionisationskammer nach Anspruch 12 oder 13, **dadurch gekennzeichnet, daß** die Dicke der Konversionsschicht zwischen 1 $\mu$m und 200 $\mu$m liegt.

**15.** Ionisationskammer nach einem der Ansprüche 1 und 3 bis 11, **dadurch gekennzeichnet, daß** die mindestens eine Elektrode (18; 19) in der Reaktionsteilkammer (4) mit Abstand von der Trennwand (15) angeordnet ist derart, daß die Röntgenstrahlung auf die Konversionsschicht der mindestens einen Elektrode (18; 19) auftrifft.

**16.** Ionisationskammer nach einem der Ansprüche 1 und 3 bis 11, **dadurch gekennzeichnet, daß** mehrere parallele Elektroden (19) in der Reaktionsteilkammer (4) mit Abstand von der Trennwand (15) angeordnet sind, derart, daß die von der Ionisationsquelle (10) ausgehende Röntgenstrahlung unter einem Winkel von etwa 90° auf die Konversionsschichten der Elektroden (19) auftrifft.

**17.** Ionisationskammer nach Anspruch 16, **dadurch gekennzeichnet, daß** die einzelnen Elektroden (19) so dick sind, daß sie jeweils etwa eine zehntel bis eine Halbwertsdicke der auf sie auftreffenden Röntgenstrahlung umfassen.

**18.** Ionisationskammer nach einem der Ansprüche 1 und 3 bis 11, **dadurch gekennzeichnet, daß** die mindestens eine Elektrode (18; 19) in der Reaktionsteilkammer (4) mit Abstand von der Trennwand (15) angeordnet ist und als Konversionsschicht eine lamellierte Oberflächenstruktur aufweist.

**19.** Ionisationskammer nach einem der Ansprüche 1 und 3 bis 18, **dadurch gekennzeichnet, daß** die Konversionsschicht der mindestens einen Elektrode (18; 19) aus Materialien besteht, deren K-Schalen- Energieniveaus betragsmäßig kleiner sind als die mittlere Quantenenergie der auf sie auftreffenden Röntgenstrahlung.

**20.** Ionisationskammer nach einem der Ansprüche 1 und 3 bis 19, **dadurch gekennzeichnet, daß** die Konversionsschicht der mindestens einen Elektrode (18; 19) aus Materialien besteht, deren K-Schalen-Energieniveaus betragsmäßig näherungsweise mit der mittleren Quantenenergie der auf sie auftreffenden Röntgenstrahlung übereinstimmt.

**21.** Ionisationskammer nach einem der vorhergehenden Ansprüche, **dadurch gekennzeichnet, daß** eine zusätzliche Fokussierungselektrode zwischen der Elektronenquelle (12) und der Röntgenanode (13) angebracht ist und mit der Beschleunigungsspannungsquelle (14) verbunden ist.

**Claims**

**1.** Ionization chamber with a non-radioactive ionization source (10), particularly for an ion mobility spectrometer, an electron capture detector or a mass spectrometer with ionization at atmospheric pressure, with a reaction compartment (4), a supply line (8) to supply an analyte to the reaction compartment (4), and a discharge line (9) to remove the analyte; the reaction compartment (4) is separated from an evacuated compartment (11) by a partition (15) which is impermeable to gas; a non-radioactive electron source (12) is mounted in the evacuated compartment (11) and connected to the negative pole of an accelerating voltage (14),
wherein

the positive pole of the accelerating voltage (14) is connected to an X-ray anode (13) in the evacuated compartment (11) in such a way that X-rays generated in the X-ray anode (13) by impinging electrons reach the partition (15) in the direction of the reaction compartment (4), that the partition (15) is essentially impermeable to electrons with the kinetic energy achieved through the accelerating voltage and largely permeable to the X-rays generated in the X-ray anode (13), and that at least one electrode (18; 19) is located in the reaction compartment (4), and X-rays passing through the partition generate photoelectrons in a conversion layer of the one or more electrode(s) (18; 19).

2. Ionization chamber with a non-radioactive ionization source (10), particularly for an ion mobility spectrometer, an electron capture detector or a mass spectrometer with ionization at atmospheric pressure, with a reaction compartment (4), a supply line (8) to supply an analyte to the reaction compartment (4), and a discharge line (9) to remove the analyte; the reaction compartment (4) is separated from the evacuated compartment (11) by a partition (15) which is impermeable to gas; a non-radioactive electron source (12) is mounted in the evacuated compartment (11) and connected to the negative pole of an accelerating voltage (14),
wherein the positive pole of the accelerating voltage (14) is connected to an X-ray anode in the evacuated compartment (11) in such a way that X-rays generated in the X-ray anode (13) by impinging electrons reach the partition (15) in the direction of the reaction compartment (4), that the partition (15) is essentially impermeable to electrons with the kinetic energy achieved through the accelerating voltage and largely permeable to the X-rays generated in the X-ray anode (13), and that on entering the reaction compartment (4) the X-rays largely have quantum energies below 2 keV so that all the air constituents contained in the reaction compartment (4) are effectively ionized by the X-ray quanta.

3. Ionization chamber according to one of the previous Claims, wherein the partition (15) consists of beryllium and has a thickness of between 10 $\mu$m and 200 $\mu$m.

4. Ionization chamber according to one of the Claims 1 or 2, wherein the partition (15) consists of mica and has a thickness of between 7 $\mu$m and 40 $\mu$m.

5. Ionization chamber according to one of the previous Claims, wherein the accelerating voltage (14) is between 2 keV and 20 keV, preferably between 5 keV and 15 keV.

6. Ionization chamber according to one of the previous Claims, wherein the X-ray anode (13) contains elements with atomic numbers greater than 50, especially gold.

7. Ionization chamber according to one of the previous Claims, wherein the X-ray anode (13) within the evacuated compartment (11) is located at a distance from the partition (15), in such a way that essentially no electrons emanating from the electron source (12) reach the partition (15).

8. Ionization chamber according to one of the Claims 1 to 6, wherein the X-ray anode (13) is applied to the partition (15) as a layer of metal, whereby impinging electrons emanating from the electron source (12) are decelerated in this metal layer and generate X-rays, which enter the partition (15) on the opposite side.

9. Ionization chamber according to Claim 8, wherein the metal layer is so thick that it amounts to at least 7 half-value thicknesses of the electrons penetrating from the electron source (12).

10. Ionization chamber according to Claim 8 or 9, wherein the metal layer is so thin that it amounts to at most 2 half-value thicknesses of the X-rays generated.

11. Ionization chamber according to one of the previous Claims, wherein the electron source (12) comprises a thermionic cathode.

12. Ionization chamber according to one of the Claims 1 and 3 to 11, wherein the electrode (18) in the reaction compartment (4) is applied to the partition (15) as a conversion layer.

13. Ionization chamber according to Claim 12, wherein the conversion layer is so thick that it amounts to at least 1, and at most 7, half-value thicknesses of the X-rays impinging on it.

14. Ionization chamber according to Claim 12 or 13, wherein the thickness of the conversion layer is between 1 $\mu$m and 200 $\mu$m.

**15.** Ionization chamber according to one of the Claims 1 and 3 to 11, wherein the one or more electrode(s) (18; 19) is/are located in the reaction compartment (4) at a distance from the partition (15) in such a way that the X-rays impinge on the conversion layer of the one or more electrode(s) (18; 19).

**16.** Ionization chamber according to one of the Claims 1 and 3 to 11, wherein several parallel electrodes (19) in the reaction compartment (4) are located at a distance from the partition (15) in such a way that the X-rays emanating from the ionization source (10) impinge on the conversion layers of the electrodes (19) at an angle of around 90°.

**17.** Ionization chamber according to Claim 16, wherein the individual electrodes (19) are so thick that they each amount to around one tenth to one half-value thickness of the X-rays impinging on them.

**18.** Ionization chamber according to one of the Claims 1 and 3 to 11, wherein the one or more electrode(s) (18; 19) in the reaction compartment (4) is/are located at a distance from the partition (15) and has/have a laminated surface structure as a conversion layer.

**19.** Ionization chamber according to one of the Claims 1 and 3 to 18, wherein the conversion layer of the one or more electrode(s) (18; 19) is made of materials whose K-shell energy level values are smaller than the average quantum energy of the X-rays impinging on them.

**20.** Ionization chamber according to one of the Claims 1 and 3 to 19, wherein the conversion layer of the one or more electrode(s) (18; 19) is made of materials whose K-shell energy level values approximately correspond to the average quantum energy of the X-rays impinging on them.

**21.** Ionization chamber according to one of the previous Claims, wherein an additional focusing electrode is mounted between the electron source (12) and the X-ray anode (13) and connected to the source of the accelerating voltage (14).

**Revendications**

**1.** Chambre d'ionisation avec une source d'ionisation non radioactive (10), en particulier pour un spectromètre de mobilité ionique, un détecteur à capture d'électrons ou un spectromètre de masse avec ionisation sous pression atmosphérique, avec une chambre de réaction (4), une conduite d'arrivée (8) pour amener la substance de la chambre de réaction (4) et une conduite de sortie (9) pour évacuer la substance, la chambre de réaction (4) étant séparée d'une chambre évacuée (11) par une cloison de séparation imperméable au gaz (15), une source d'électrons non radioactive (12) étant installée dans la chambre évacuée (11) et raccordée au pôle négatif d'une tension d'accélération (14),
**caractérisée par le fait que**
le pôle positif de la tension d'accélération (14) est raccordé à une anode à rayons X (13) dans la chambre évacuée (11), de sorte que le rayonnement X produit dans l'anode à rayons X (13) par le contact des électrons en direction de la chambre de réaction (4) atteint la cloison de séparation (15), que la cloison de séparation (15) est essentiellement imperméable aux électrons de l'énergie cinétique obtenue par la tension d'accélération et largement perméable au rayonnement X produit dans l'anode à rayons X (13) et que dans la chambre de réaction (4) au moins une électrode (18 ; 19) est disposée pour la production de photoélectrons dans une couche de conversion d'au moins une électrode (18 ; 19) par le biais du rayonnement X traversant la cloison de séparation.

**2.** Chambre d'ionisation avec une source d'ionisation non radioactive (10), en particulier pour un spectromètre de mobilité ionique, un détecteur à capture d'électrons ou un spectromètre de masse avec ionisation sous pression atmosphérique, avec une chambre de réaction (4), une conduite d'arrivée (8), pour amener la substance de la chambre de réaction (4) et une conduite de sortie (9) pour évacuer la substance, la chambre de réaction (4) étant séparée de la chambre évacuée (11) par une cloison de séparation imperméable au gaz (15), une source d'électrons non radioactive (12) étant installée dans la chambre évacuée (11) et raccordée au pôle négatif d'une tension d'accélération (14),
**caractérisée par le fait que**
le pôle positif de la tension d'accélération (14) est raccordé à une anode à rayons X dans la chambre évacuée (11), de sorte que le rayonnement X produit dans l'anode à rayons X (13) par le contact des électrons en direction de la chambre de réaction (4) atteint la cloison de séparation (15), que la cloison de séparation (15) est essentiellement imperméable aux électrons de l'énergie cinétique obtenue par la tension d'accélération et largement perméable au rayonnement X produit dans l'anode à rayons X (13) et que le rayonnement X, lorsqu'il pénètre la chambre de réaction (4), comprenne principalement une énergie quantique inférieure à 2 keV, de façon à ce que tous les composants atmosphériques contenus dans la chambre de réaction (4) soient effectivement ionisés par les quanta des rayons X.

3. Chambre d'ionisation correspondant à l'une des revendications précédentes, **caractérisée par le fait que** la cloison de séparation (15) est composée de béryllium et présente une épaisseur comprise entre 10 $\mu$m et 200 $\mu$m.

4. Chambre d'ionisation correspondant à l'une des revendications 1 ou 2, **caractérisée par le fait que** la cloison de séparation (15) est composée de mica et présente une épaisseur comprise entre 7 $\mu$m et 40 $\mu$m.

5. Chambre d'ionisation correspondant à l'une des revendications précédentes, **caractérisée par le fait que** la tension d'accélération (14) est comprise entre 2 keV et 20 keV, et de préférence entre 5 keV et 15 keV.

6. Chambre d'ionisation correspondant à l'une des revendications précédentes, **caractérisée par le fait que** l'anode à rayons X (13) comprend des éléments aux numéros atomiques supérieurs à 50, et notamment l'or.

7. Chambre d'ionisation correspondant à l'une des revendications précédentes, **caractérisée par le fait que** l'anode à rayons X (13) à l'intérieur de la chambre évacuée (11) est disposée avec un écart par rapport à la cloison de séparation (15), de sorte qu'en principe aucun des électrons émis par la source d'électrons (12) n'atteint la cloison de séparation (15).

8. Chambre d'ionisation correspondant à l'une des revendications 1 à 6, **caractérisée par le fait que** l'anode à rayons X (13) est montée sous forme de couche métallique sur la cloison de séparation (15), de sorte que les électrons provenant de la source d'électrons (12) et qui entrent en contact avec la couche métallique sont ralentis et produisent un rayonnement X qui traverse la cloison de séparation (15) de l'autre côté.

9. Chambre d'ionisation correspondant à la revendication 8, **caractérisée par le fait que** la couche métallique est épaisse de façon à comprendre au moins 7 demi-couches des électrons pénétrants provenant de la source d'électrons (12).

10. Chambre d'ionisation correspondant à la revendication 8 ou 9, **caractérisée par le fait que** la couche métallique est fine de façon à comprendre au maximum 2 demi-couches du rayonnement X produit.

11. Chambre d'ionisation correspondant à l'une des revendications précédentes, **caractérisée par le fait que** la source d'électrons (12) comprend une cathode incandescente.

12. Chambre d'ionisation correspondant à l'une des revendications 1 et 3 à 11, **caractérisée par le fait que** l'électrode (18) est disposée dans la chambre de réaction (4) sous forme de couche de conversion sur la cloison de séparation (15).

13. Chambre d'ionisation correspondant à la revendication 12, **caractérisée par le fait que** la couche de conversion est épaisse de façon à comprendre au moins 1 et au maximum 7 demi-couches du rayonnement X qui entre en contact avec elle.

14. Chambre d'ionisation correspondant à la revendication 12 ou 13, **caractérisée par le fait que** l'épaisseur de la couche de conversion est comprise entre 1 $\mu$m et 200 $\mu$m.

15. Chambre d'ionisation correspondant à l'une des revendications 1 et 3 à 11, **caractérisée par le fait qu'**au moins une électrode (18 ; 19) dans la chambre de réaction (4) est disposée avec un écart par rapport à la cloison de séparation (15), de sorte que le rayonnement X entre en contact avec la couche de conversion d'au moins une électrode (18 ; 19).

16. Chambre d'ionisation correspondant à l'une des revendications 1 et 3 à 11, **caractérisée par le fait que** plusieurs électrodes parallèles (19) dans la chambre de réaction (4) sont disposées avec un écart par rapport à la cloison de séparation (15), de sorte que le rayonnement X émis par la source d'ionisation (10) entre en contact avec les couches de conversion des électrodes (19) selon un angle d'environ 90 °.

**17.** Chambre d'ionisation correspondant à la revendication 16, **caractérisée par le fait que** toutes les électrodes (19) sont épaisses de façon à comprendre chacune entre un dixième et une demi-couche du rayonnement X qui entre en contact avec elle.

**18.** Chambre d'ionisation correspondant à l'une des revendications 1 et 3 à 11, **caractérisée par le fait qu'**au moins une électrode (18 ; 19) dans la chambre de réaction (4) est disposée avec un écart par rapport à la cloison de séparation (15) et présente une structure de surface lamellée à titre de couche de conversion.

**19.** Chambre d'ionisation correspondant à l'une des revendications 1 et 3 à 18, **caractérisée par le fait que** la couche de conversion d'au moins une électrode (18 ; 19) est composée de matériaux dont les valeurs du niveau énergétique de la couche K sont inférieures à l'énergie quantique moyenne du rayonnement X qui entre en contact avec elle.

**20.** Chambre d'ionisation correspondant à l'une des revendications 1 et 3 à 19, **caractérisée par le fait que** la couche de conversion d'au moins une électrode (18 ; 19) est composée de matériaux dont les valeurs du niveau énergétique de la couche K sont approximativement similaires à l'énergie quantique moyenne du rayonnement X qui entre en contact avec elle.

**21.** Chambre d'ionisation correspondant à l'une des revendications précédentes, **caractérisée par le fait qu'**une électrode de concentration supplémentaire est disposée entre la source d'électrons (12) et l'anode à rayons X (13) et raccordée à la source de tension d'accélération (14).

Fig.1

Fig.2

Fig.3a

Fig.3b

Fig.3c